# EUROPEAN PATENT SPECIFICATION

(11) **EP 1 687 235 B1**
(45) Date of publication and mention of the grant of the patent: **24.09.2008**
(21) Application number: 04808703.5
(22) Date of filing: 09.11.2004
(51) Int. Cl.: B67D 5/02

(54) **DEVICE FOR DISPENSING A SUBSTANCE**
VORRICHTUNG ZUR ABGABE EINER SUBSTANZ
DISPOSITIF PERMETTANT DE DISTRIBUER UNE SUBSTANCE

(30) Priority: 11.11.2003 NL 1024759
(43) Date of publication of application: 09.08.2006
(73) Proprietor: Innovation Invest B.V., 3628 ET Kockengen (NL)
(72) Inventor: EVERS, Lucas, Alphonsus, Maria, NL-3707 CL Zeist (NL)
(74) Representative: Houben, Christiaan Hein Willem Frans
(86) International application number: PCT/NL2004/000787
(87) International publication number: WO 2005/044717

(56) References cited:
- EP-A- 0 369 723
- EP-A- 0 908 414
- WO-A-99/11563
- DE-U- 9 319 793
- US-A- 5 842 604

## Description

The invention relates to a device for dispensing a substance according to the preamble of claim 1.

Such a device is known from DE 9319793U. The known device has an open slot which connects the chamber for the container and the chamber for the drive means.

The invention has for an object to provide an improved device.

This object is achieved by a device according to claim 1. The dispensing device according to the invention has sealing means which are provided for sealing off the passage slot between the chamber for the container and the chamber for the drive means such that the container does not move into the passage slot as it is compressed.

This device makes it possible for a compressible container, which in a preferred embodiment is designed as a pouch, to be placed in the associated chamber in the housing from above. The counter-supporting member, which is preferably designed as a lid, can then be fitted and substance can be dispensed. In the process, the pressure-exerting member moves upwards.

Preferably, the device comprises a dispensing passage member which forms a dispensing passage for the substance, the dispensing passage member being provided in the vicinity of the top side of the chamber of the dispensing device, and the dispensing passage preferably forming a downwardly facing dispensing mouthpiece. The dispensing passage member may be an integral component of the compressible container, for example a hose-like element.

In an advantageous embodiment, the dispensing passage member is a loose component which can be coupled to the outlet member of the container. This arrangement is preferably designed in such a manner that the coupling is unbreakable, which means that after the pouch has been emptied under the application of pressure the dispensing passage member also has to be disposed of. This is advantageous from a food hygiene perspective.

Preferably, the dispensing device is provided with fixing means for fixing the dispensing passage member, which has already been coupled to the container, with respect to the housing.

Further advantageous embodiments of the device according to the invention are described in the claims and in the following description with reference to the drawing, in which:
Fig. 1 diagrammatically depicts a side view of a preferred embodiment of the dispensing device of the system according to the invention,
Fig. 2 shows a plan view of the dispensing device from Figure 1 with the lid removed,
Figs. 3-5 show the same view as in Figure 1, with the container having been emptied to an ever increasing extent,
Fig. 6 shows a detail of the dispensing device and associated compressible container,
Fig. 7 shows a detail of the dispensing system,
Fig. 8 shows a side view of drive means of a preferred embodiment of the device according to the invention,
Fig. 9 shows a cross section through a preferred embodiment of a dispensing device according to the invention,
Fig. 10 shows an embodiment of compression means for compressing a dispensing passage member,
Fig. 11 shows another embodiment of compression means for compressing a dispensing passage member, and
Fig. 12 shows a plan view of the dispensing device shown in Figure 1, with the lid removed.

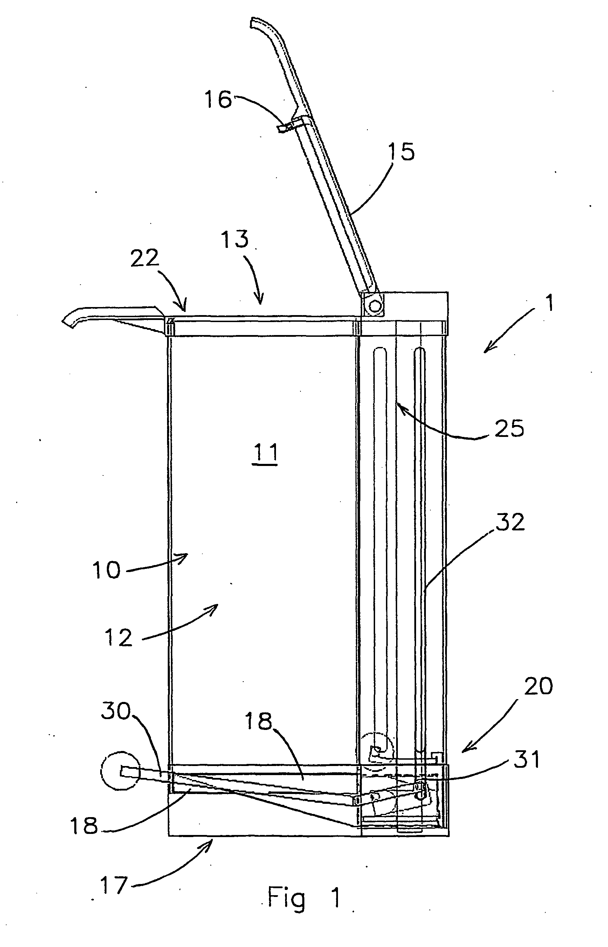

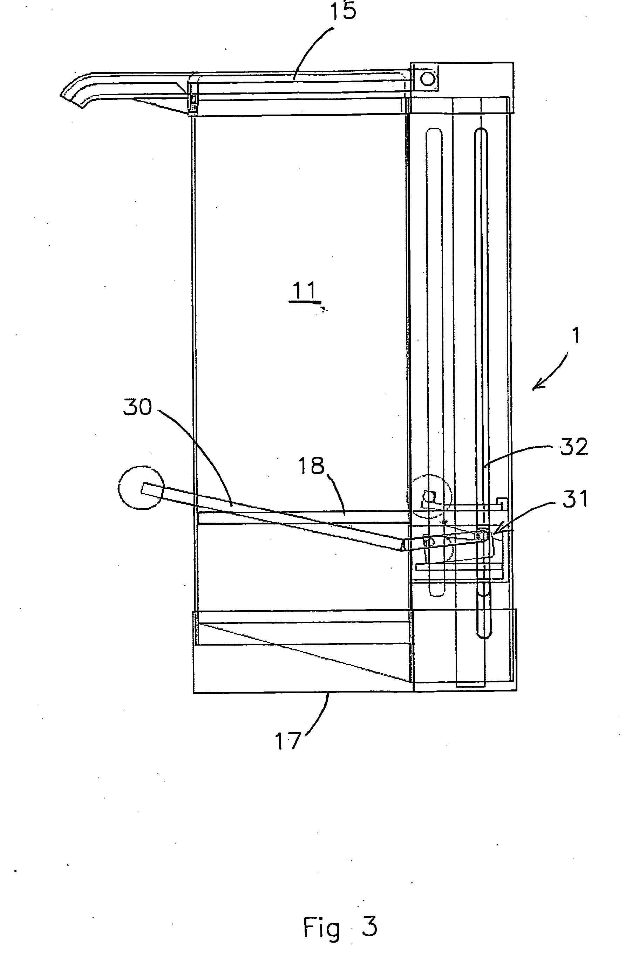

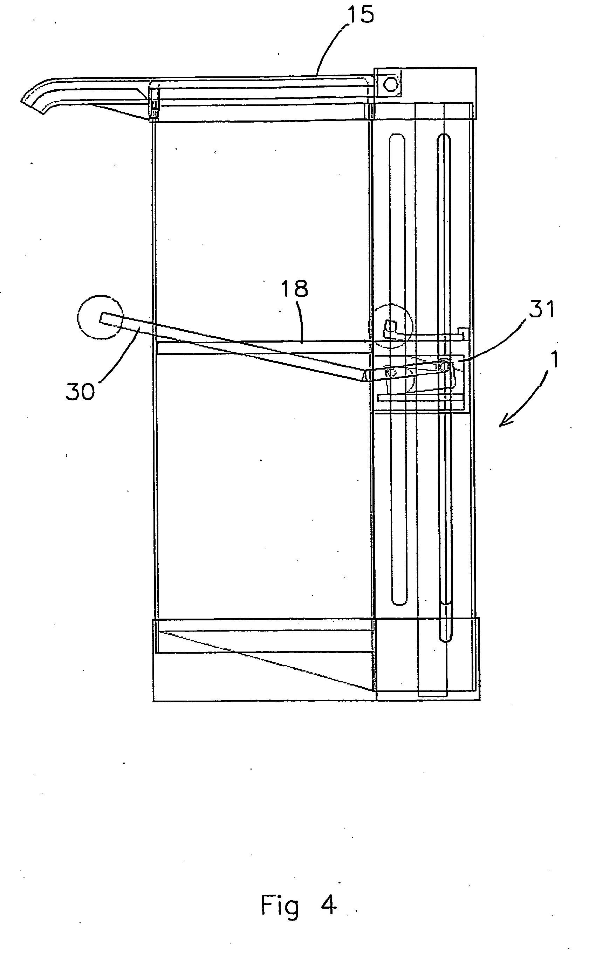

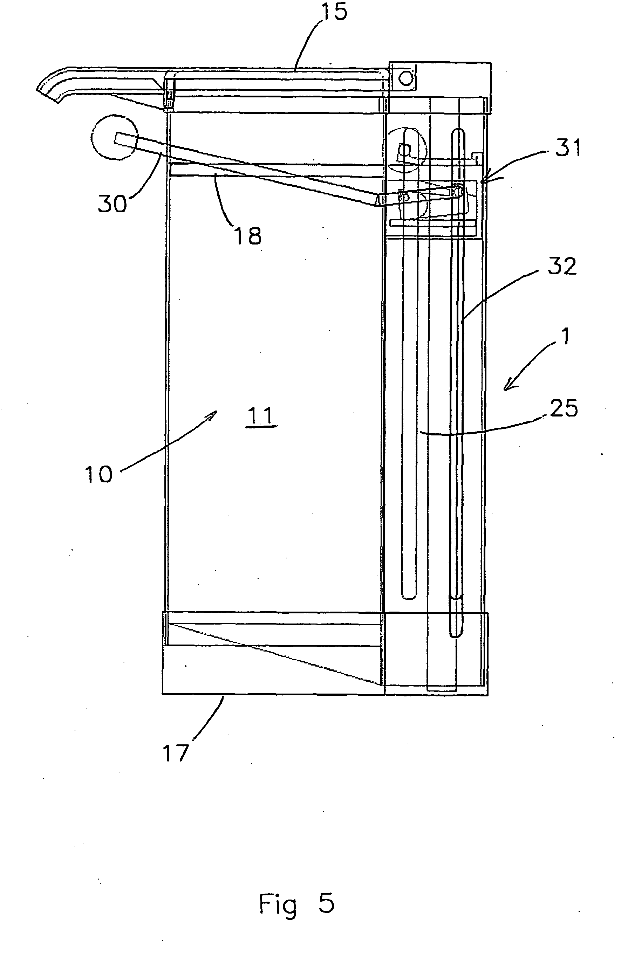

Figures 1-5 show a dispensing device 1 for the metered dispensing of substance from a compressible container 2 for a stock of substance that is to be dispensed. The container has been omitted from Figures 1-5 for the sake of clarity.

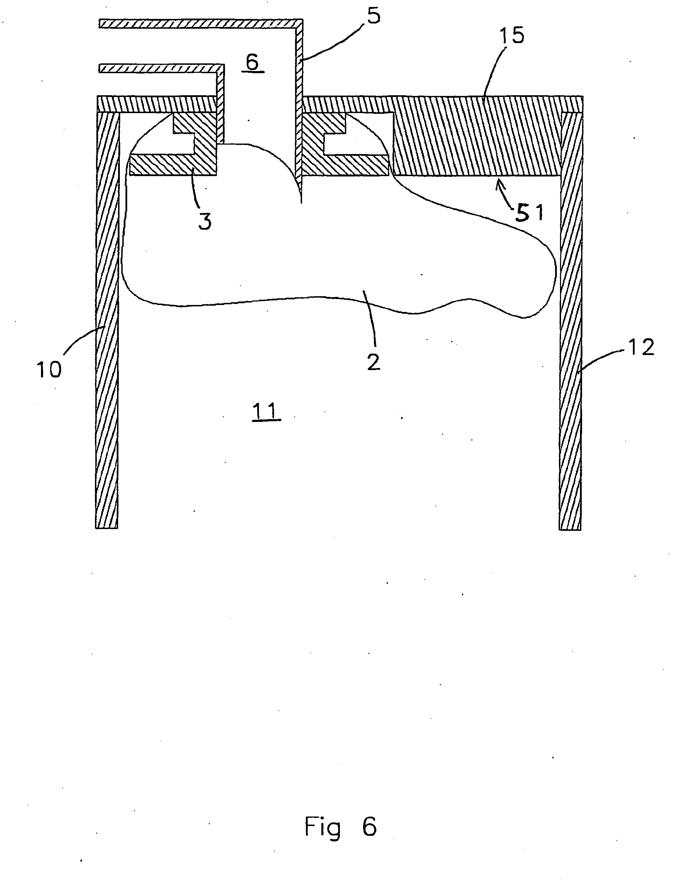

The container is preferably a (plastic) pouch 2, as partially shown in Figure 6, provided with an outlet member 3. However, the container could also be a container with a dimensionally stable, deformable wall, such as for example a type of PET bottle. The outlet member 3 shown is of a generally known type, as marketed, for example, by Asept in Sweden. This outlet member 3 is arranged on the inner side of the pouch 2 and is substantially annular with an insertion opening 4 for a dispensing passage member 5.

As is known from Asept, it is preferable for the pouch wall to be punctured during coupling of the dispensing passage member 5 and the outlet member 3, or if appropriate only in a second operation after the coupling operation.

At one end, the dispensing passage member 5 preferably comprises a part which punctures the pouch and is made from hard plastic, as well as an adjoining part which at the other end opens to the outside and is made from flexible plastic. It is preferable for these two parts to be made from a single piece of plastic, in which case the different properties of the said parts are obtained by, for example, optionally rapid cooling of the relevant part of the dispensing passage member 5 or in some other way.

The coupling between outlet member 3 and dispensing passage member 5 is preferably permanent, so that the coupling cannot be released again. This means that the dispensing passage member 5 has to be disposed of together with the pouch 2.

The device 1 has a housing 10 with a chamber 11 for accommodating a compressible container 2. The chamber 11 has a substantially vertically extending peripheral wall 12 and an opening 13 at the top side for the container 2 to be placed in the chamber 11 from above.

When using a separate dispensing passage member 5, it is preferable for the said member 5 to be coupled to the pouch 2 in advance and for the unit formed in this way to be placed into the device 1. In a variant which is not shown, it is provided that the user first of all fixes the loose dispensing passage member with respect to the housing and then couples the container to the dispensing passage member.

In yet another variant, the dispensing passage member is incorporated integrally in the dispensing device, for example as part of the housing.

In another possible embodiment of the container 2, the dispensing passage member 5 may be formed integrally with the outlet member 3. In this case, during use the container 2 is placed in the device 1 together with the dispensing passage member 5 and is then disposed of after use. In an embodiment of this type, the dispensing passage member 5 is closed off in a suitably sealed way.

The device 1 has a counter-supporting member 15 for the top side of pouch 2, which is in this case designed as a hinged lid with an associated locking means 16 for locking the lid 15 in the closed position.

After the pouch 2 with member 5 has been placed in the device 1, the lid 15 is fitted over the opening 13 at the top side of the chamber 10 and locked.

The housing 10 has a foot 17, by means of which the housing 10 can be placed on a supporting surface.

Furthermore, the device 1 has a displaceable pressure-exerting member 18 which extends as a base that can be displaced up and down in the chamber 11 and is designed to act on the pouch 2 which has been placed in the chamber 11.

To move the pressure-exerting member 18 upwards under a pressure-exerting force, drive means 20 are provided, in such a manner that the substance is dispensed from the pouch 2 through compression of the pouch 2 between the lid 15 and the pressure-exerting member 18 moving upwards in the direction of the lid 15.

Before closing the lid 15, the dispensing passage member 5 is brought into engagement with fixing means 21, in this case the slot 22, so that the dispensing passage member 5 and the outlet member 3 are at the correct position.

As can be seen in the drawing, the dispensing passage member 5 is preferably located in the vicinity of the top side of the chamber 11 of the dispensing device 1. The dispensing passage 6 preferably has a dispensing mouthpiece facing downwards.

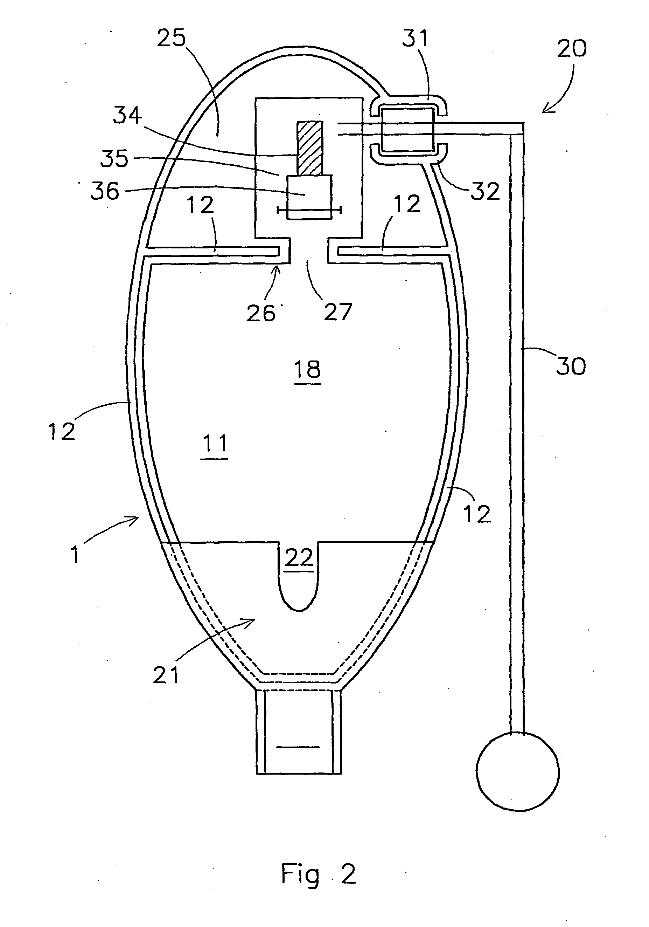

It is clearly apparent from Figure 2 that the housing 10, next to the chamber 11 for accommodating the pouch 2, has a vertical chamber 25 for accommodating a drive mechanism 20 which is connected to the pressure-exerting member 18.

The peripheral wall of the chamber 11 is provided with a vertical slot 26 which forms a passage to the other chamber 25, the pressure-exerting member 18 having a connecting element 27 which extends through the said slot 26 into the other chamber 25 and thereby connects the pressure-exerting member to the drive means 20.

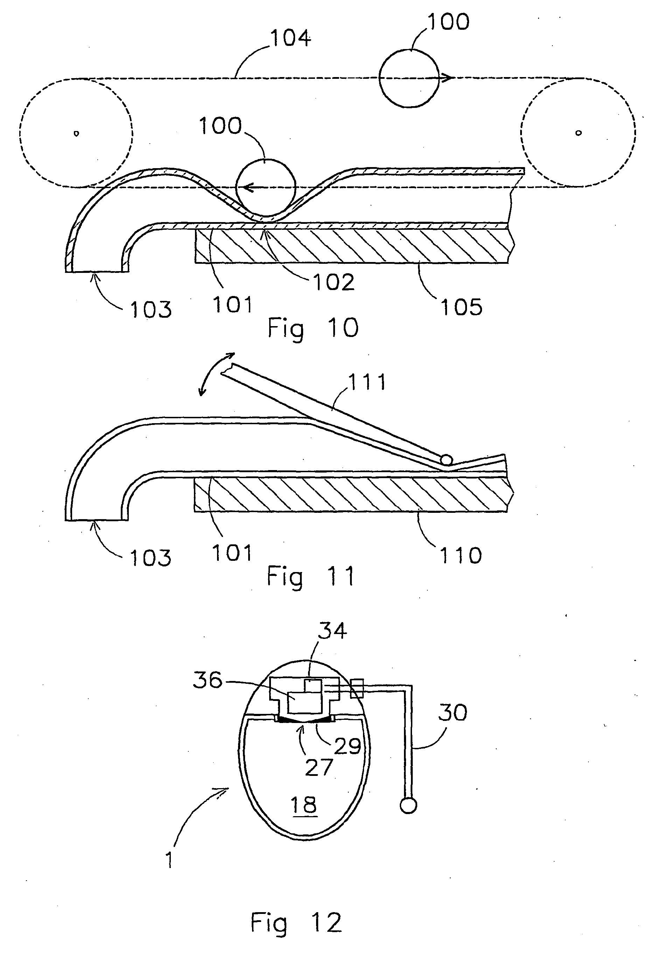

There are sealing means for sealing off the passage slot 26, in such a manner that the pouch 2 does not move into the passage slot 26 as it is compressed. By way of example, for this purpose there are brushes 29 (Fig. 12) or another stationary element, for example a stationary sealing tape, which can be deformed in such a manner that it can engage around the connecting element 27 and can seal off the slot. Another possible option is a sealing tape 28 (Fig. 2) which moves with the pressure-exerting member 18 and seals off the slot in the region above the pressure-exerting member 18 to prevent the pouch 2 from moving into the slot.

In the embodiment shown, the drive means comprise a manually driven mechanism, but other solutions, such as those using an electric drive, are of course also possible.

The drive means 20 in this case comprise an actuating handle 30 which can be pivoted through an angle range, in such a manner that each actuating movement dispenses a portion of substance as a result of the pressure-exerting member 18 being moved a certain distance upwards so as to compress the pouch 2 further.

In one possible embodiment, the housing has a stationary pivot bearing for the actuating handle, preferably in the vicinity of the top side of the housing.

In the embodiment shown, the actuating handle 30 has an associated pivot bearing 31 which is guided in a vertically moveable manner in a guide feature 32 with respect to the housing 10, in such a manner that as a result of actuation of the pivot handle 30 the pivot bearing 31 is in each case displaced a distance upwards with respect to the housing. This can be seen from Figures 1,3-5.

The transmission mechanism between the handle 30 and the pressure-exerting member 18 can be designed in a wide range of ways. One possible solution is a threaded spindle which is rotated in steps through actuation of the handle 30, a spindle nut member being connected to the pressure-exerting member.

Another possible design has a rod 34, a carrier 35 for the pressure-exerting member 18 which can slide along the rod and a quick-action displacement and clamping mechanism (with clamping lug 36) which engages on the rod, as is known, for example, from US 4 926 722 (Quick-Grip). A mechanism of this type can also be designed "double" in order to achieve a stationary setting of the manual actuation member, for example a pivot handle. In this case, two rods would be provided, one coupled directly to the manual actuation member and, via a freewheeling coupling, to the component which climbs upwards along the other rod.

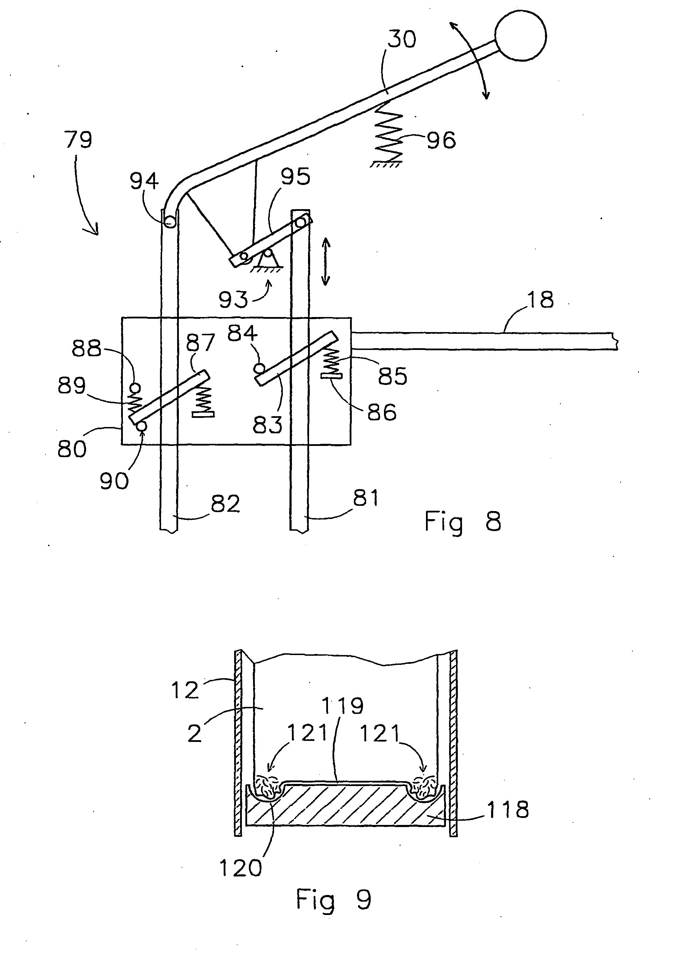

One possible embodiment of the drive means having the "double" system is shown by way of example in Fig. 8. In the figure, in accordance with what has been described above, the pressure-exerting member is denoted by reference numeral 18 and the actuating handle is denoted by 30. The drive means 79 of the "double" system comprise a drawing rod 81 which can move to and fro in the axial direction and a stationary rod 82 arranged parallel to the drawing rod. The pressure-exerting member 18 is coupled to a carrier 80. A tilting plate 83 with a passage bore for the rod 81 is arranged around the drawing rod 81. At an end region, the top side of the tilting plate 83 is placed against a supporting pin 84 secured to the carrier 80. The underside of the other end region of the tilting plate 83 is supported by a spring 85, which in turn is supported on a supporting member 86 which is fixedly connected to the carrier 80. A tilting plate 87 with a passage bore for the rod 82 is arranged around the stationary rod 82. The top side of an end region of the tilting plate 87 is placed against a spring 89 which is secured to the carrier 80 and is connected to a supporting pin 88. The underside of the other end region of the tilting plate 87 is supported by a spring 91, which in turn is supported on a supporting member 92 which is fixedly connected to the carrier 80. Furthermore, there is a stop member 90 which limits the movement of the tilting plate 87 by the spring 89.

The handle 30 is connected to the stationary rod 82 by means of a pivot bearing 94, but could also be connected to another stationary component of the device 1. Via a reversing mechanism 93 which comprises a lever 95, a pivoting movement of the handle 30 is converted into an axial movement of the drawing rod 81. When the handle 30 pivots downwards (in the clockwise direction in the figure), the drawing rod 81 moves upwards, and when the handle 30 pivots upwards (in the anticlockwise direction in the figure), the drawing rod 81 moves downwards.

During use, the handle 30 will be pivoted downwards and therefore the drawing rod 81 will be moved upwards. The tilting plate 83 then adopts an oblique position and tilts about the drawing rod 81, with the result that the carrier 80 is coupled to the drawing rod 81 and moves upwards with it. Then, the handle 30 is pivoted back into an at-rest position, with the result that the drawing rod 81 is moved downwards. The handle 30 could be made to pivot back, for example, by means of a restoring spring 96, as shown in the figure. The tilting plate 83 is also moved downwards by the movement of the drawing rod 81, with the result that the tilting plate 83 will tilt with respect to the drawing rod 81, i.e. adopts a less oblique position with respect to the rod 81. As a result, the tilting plate 83, and therefore the carrier 80, is decoupled from the drawing rod 81. Therefore, the carrier 80 will not also be pulled downwards by the drawing rod 81.

When the carrier 80 moves upwards, the other tilting plate 87 is tilted towards a less oblique position and is decoupled from the carrier 80. Therefore, the carrier 80 can move freely upwards with respect to the stationary rod 82. When the carrier 80 comes to a stop at the end of the upwards movement of the drawing rod 81, the tilting plate 87 adopts a more oblique position with respect to the stationary rod, so that the carrier 80 is coupled to the stationary rod. Therefore, the carrier 80 is only connected to the drawing rod 81 and decoupled from the stationary rod 82 during the upwards movement of the drawing rod 81.

The spring 89 which is arranged between the supporting point 88 and the tilting plate 87 ensures that the carrier 80, when it comes to a stop after an upwards movement and is decoupled from the drawing rod 81, can drop a predetermined, small distance downwards, so that the pressure on the container 2 which is being compressed by the pressure-exerting member 18 is reduced and is preferably eliminated altogether. This movement is also referred to as "backdrop" and prevents liquid from continuing to flow out of the container 2 when the upwards movement of the drawing rod 81 has been completed. This allows an accurately measured quantity to be dispensed per movement of the handle 30, allowing good metering of sauce, for example.

It is also possible to use an embodiment in which there is no spring 89, but rather the second tilting plate 87 is formed in such a manner that it is coupled to the stationary rod-like element 82 at a defined minimum tilting angle of the tilting plate 87 with respect to the stationary rod-like element 82. In particular, the passage bore in the tilting plate is formed and dimensioned in such a manner that the minimum tilting angle is reached when the carrier 80 has dropped a certain distance downwards and the load on the container 2 has been at least partially relieved.

As another alternative, it would be possible to provide a chain mechanism with two wheels which are positioned one above the other and around which a chain loop runs. The pressure-exerting member 18 is then connected to the chain. Driving one of the wheels in steps then causes the said pressure-exerting member to be moved upwards in steps.

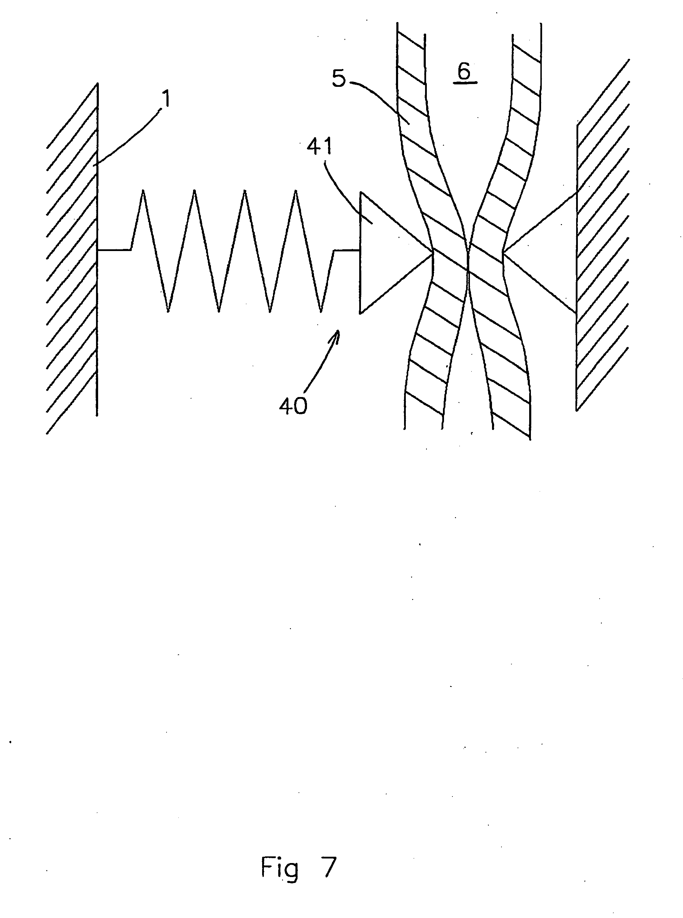

It is preferable to provide a valve, preferably a self-closing valve, for closing off the dispensing passage 6. If the dispensing passage member 5 is a flexible hose-like element, as in Figure 7, it is possible to provide a squeezing-shut means 40 for locally squeezing the flexible hose-like element shut, for example a squeezing-shut means 41 which is placed under spring pressure.

As an alternative, it is possible to fit an actively actuable valve. The actively actuable valve is coupled to the drive means 20, 79 and is opened at the moment at which the pressure-exerting mechanism is actuated. As a result, the valve is already open when the container 2 is placed under pressure. This has the advantage over the self-closing valve described above with reference to Fig. 7 that the device can even be used to dispense a sauce which contains solid constituents as well as a liquid constituent. With a self-closing valve as shown in Fig. 7, the solid constituents would be retained by the valve and only the liquid fraction of the sauce would be dispensed.

To prevent the possibility of the actively actuated valve being held open while the container 2 is under pressure, it is possible for the actively actuated valve to be closed by a preferably mechanical timing mechanism. The timing mechanism ensures that the valve can only remain open for a preset time. This allows accurate metering of sauce.

It is also possible for the actively actuated valve to be closed by a threshold mechanism which is activated when a mechanical or electronic threshold at the end of the movement of the drive means is exceeded. This too allows accurate metering.

To achieve optimum emptying of the pouch 2, there is provision for the lid 15 to have a wall surface 51 which faces the pressure-exerting member 18 (cf. Figure 6) and is substantially complementary to the opposite surface of the pressure-exerting member 18, in such a manner that the outlet member 3 of the pouch 2, as seen in the direction in which pressure is exerted, is recessed with respect to the wall surface 51 of the lid 15, so that the pouch 2 can be emptied to the maximum possible extent.

This latter aspect is also advantageous for other configurations in which a pouch 2 with outlet member 3 is emptied by a pressure-exerting member. In a device of this type, a wall is then provided with a recess for accommodating the outlet member, so that the surrounding wall surface is complementary to the associated surface of the pressure-exerting member.

To achieve optimum emptying of the container 2, the pressure-exerting member may advantageously be formed as shown in cross section in Fig. 9. The pressure-exerting member 118 shown in Fig. 9 has an engagement surface 119 and a groove 120 located around it. The groove 120 is used to accommodate container material which becomes wrinkled during compression, as indicated at 121 in the figure.

To prevent the container 2 from folding up in the centre rather than at the pressure-exerting member 118 under the influence of the compressive force, it is possible to make the inner side of the wall 12 suitably rough, so that wrinkling of the container 2 is counteracted by the friction between the container 2 and the wall 12, except for at the location of the pressure-exerting member 118.

It is preferable for the device to include compression

means for deforming the dispensing passage in such a manner that the substance in the dispensing passage is pressed outwards. The compression means comprise, for example, as shown in Fig. 10, a compression member 100 which is designed to compress the dispensing passage 101 at a defined compression region, indicated by 102, during dispensing of substance and to displace the compression region 102 along the dispensing passage 101 in the direction of the dispensing mouthpiece 103. 105 denotes a supporting element for the dispensing passage 101. A compression member 100 may, for example, be one or more rollers or cams which press on the dispensing passage and are rolled or slid along the dispensing passage towards the dispensing mouthpiece. The rollers or cams may be secured to a belt or chain 104 as indicated by way of example in Fig. 10. The chain or belt 104 can be driven by drive means, which are preferably coupled to the drive means of the pressure-exerting member for compressing the container.

In the figure, there are two rollers 100, but there could of course be more rollers, so that a type of wave motion or a peristaltic motion is produced in the dispensing passage 101. According to a possible variant embodiment, the compression means may also comprise a peristaltic vane pump, in which case the vanes serve as compression member and are driven by a worm wheel. The vanes compress the dispensing passage one by one in succession, so that the substance is forced towards the dispensing mouthpiece.

In an alternative embodiment of the compression means, the passage 101 can be compressed ever closer towards the dispensing mouthpiece 103 from one side by means of pressure-exerting elements 110 and 111 as shown in Fig. 11. These elements may, for example, be pressure-exerting plates. The pressure-exerting element 110 is stationary and serves to support the dispensing passage 101. The pressure-exerting element 111 is secured pivotably and can be pivoted in the direction of the pressure-exerting element 110, so that the dispensing passage is compressed ever further towards the dispensing mouthpiece 103 between the two pressure-exerting elements 110, 111.

The compression means are particularly advantageous if a viscous substance is to be dispensed from the container, in which case simply applying a pressure to the container alone will not be sufficient for satisfactory dispensing of the substance. Moreover, the compression means can also be used in dispensing devices other than the dispensing device disclosed in the figures and the description.

## Claims

1. A dispensing device (1) for the metered dispensing of substance from a compressible container (2), which device (1) comprises:
- a housing (10) having a chamber (11) for accommodating the compressible container (2), which chamber (11) has a substantially vertically extending peripheral wall (12) and an opening (13),
- a counter-supporting member (15), which counter supporting member (15) can be placed over the opening (13) of the chamber (11) after the container (2) has been placed into the chamber (11),
- a displaceable pressure-exerting member (18) which extends as a base which can be moved up and down in the chamber (11) and is designed to act on the container (2) placed in the chamber (11),
- drive means (20; 79) for the pressure-exerting member (18), such that the substance is dispensed from the container (2) through compression of the container (2) between the counter-supporting member (15) and the pressure-exerting member (18; 118) moving in the direction of the counter-supporting member (15),
wherein the housing, next to the chamber (11) for accomodating the container (2), has a vertical chamber (25) for accomodating a drive mechanism (20; 79), wherein the peripheral wall of the chamber (11) for accomodating the container (2) is provided with a vertical slot (26) which forms a passage to the other chamber (25), the pressure-exerting member (18; 118) having a connecting element (27) which extends through the said slot (26) and into the other chamber (25), thereby connecting the pressure-exerting member (18) to the drive means (20; 79), **characterized in that** the chamber (11) for accomodating the container (2) has the opening (13) at the top.side for placing the container (2) into the chamber (11) from above, and **in that** sealing means (28; 29) are provided for sealing off the passage slot (26), in such a manner that the container (2) does not move into the passage slot (26) as it is compressed.

2. System for dispensing a substance, comprising:
- a compressible container (2) for a stock of substance that is to be dispensed, which container (2) has an outlet member (3) for dispensing substance from the container (2), and
- a dispensing device (1) for the metered dispensing of substance from the compressible container (2) according to claim 1.

3. System according to claim 2, in which a sealing tape (28) is provided, sealing off the slot (26) in the region above the pressure exerting member (18) so as to prevent the compressible container (2) from entering the slot (26).

4. System according to claim 2 or 3, which comprises a dispensing passage member (5), which forms a dispensing passage for the substance, the dispensing passage member (5) being provided in the vicinity of the top side of the chambers (11) of the dispensing device (1), and the dispensing passage preferably forming a downwardly facing dispensing mouthpiece.

5. System according to claim 4, in which the dispensing passage member (5), is a loose component which can be coupled to the outlet member (3) of the container.

6. System according to claim 5, in which the dispensing passage member (5) is formed from a single piece of plastic as a flexible tube having a hard end part to couple the dispensing passage member (5) to the outlet member (3) of the container.

7. System according to claim 5 or 6, in which the dispensing device is provided with fixing means (21) for fixing the dispensing passage member (5), which has already been coupled to the container, with respect to the housing (10).

8. System according to one or more of the preceding claims, in which the counter-supporting member (15) is a lid which can be fixed to the housing (10) using suitable locking means.

9. System according to claim 8, in which the lid (15) is pivotably attached to the housing (10).

10. System according to one or more of the preceding claims, in which the drive means (20) comprise a hand-driven mechanism.

11. System according to claim 10, in which the drive means comprise an actuating handle (30) which can be pivoted over an angle range, in such a manner that a portion of substance is dispensed on each actuating movement.

12. System according to claim 11, in which the housing (10) has a stationary pivot bearings (31) for the actuating handler (30) preferably in the vicinity of the top side of the housing (10).

13. System according to claim 12, in which the drive means comprise a carrier (35, 80) which is connected to the pressure-exerting member (18) and is guided such that it can move vertically with respect to the housing (10), which carrier can in each case be coupled to the pivoting handle (30) in such a manner that as a result of actuation of the pivoting handle (30) the carrier (35, 80) is in each case moved a distance upwards with respect to the housing (10).

14. System according to claim 13, in which the actuating handle (30) is coupled to a rod-like drawing element (81), and in which the carrier (80) is provided with a first tilting plate (83) for producing the coupling between the drawing element (81) and the carrier (80) when the actuating handle (30) is actuated.

15. System according to claim 13 or 14, in which the drive means also comprise a stationary guide element (82) to which the carrier (80) can be coupled, in such a manner that the carrier (80), when it is decoupled from the actuating handle (30), is held in place by the stationary guide element (82).

16. System according to claim 15, in which the stationary guide element (82) comprises a rod-like element, and in which the carrier (80) is provided with a second tilting plate (87) for producing the coupling between the stationary rod-like element (82) and the carrier (80).

17. System according to one or more of claims 10-16, in which the drive means comprise a pressure-reducing mechanism, in order to move the pressure-exerting member (18) a small distance back at the end of the dispensing of substance, in order to reduce the pressure in the container.

18. System according to claim 17, to the extent that it is dependent on claim 16, in which the second tilting plate (87) is fitted resiliently to the carrier (80), in such a manner that the carrier (80), at the instant at which the tilting plate (87) engages on the stationary rod-like element (82), is able to drop downwards by a distance which is such that the pressure in the container is reduced.

19. System according to claim 17, to the extent that it is dependent on claim 16, in which the second tilting plate (87) is shaped in such a manner that at a defined minimum tilting angle of the tilting plate (87) with respect to the stationary rod-like element (82) it is coupled to the latter, which minimum tilting angle is reached when the carrier (80) has dropped a certain distance downwards.

20. System according to claim 11, in which the actuating handle has an associated pivot bearing (31) which is guided in a vertically moveable manner with respect to the housing (10), in such a manner that as a result of actuation of the pivoting handle (30) the pivot bearing (31) is in each case moved a distance upwards with respect to the housing (10).

21. System according to claim 4, in which a valve, preferably a self-closing valve, is provided for closing off the dispensing passage.

22. System according to claim 4, in which the dispensing passage member comprises a flexible hose-like element (5) which forms the dispensing passage.

23. System according to claims 21 and 22, in which the device is provided with a squeezing-shut means (40) for locally squeezing the flexible hose-like element (5) shut, for example a squeezing-shut means which is under spring pressure.

24. System according to claim 4, in which an actively actuable valve is provided for closing off the dispensing passage, which valve is coupled to the drive means (20; 79) of the pressure-exerting member (18) in such a manner that the valve is actively opened by the drive means (20; 79) when the pressure-exerting member (18) is driven in order to compress the container (2).

25. System according to claim 24, in which the actively actuable valve is provided with a timing mechanism which closes the opened valve after a predetermined time.

26. System according to claim 24 or 25, in which the actively actuable valve can be actuated by the drive means (20; 79) for the pressure-exerting member, in such a manner that the valve is opened just before the pressure-exerting member (18) is driven.

27. System according to claim 4, in which the dispensing passage member is integral with the dispensing device, so that the container (2) can be coupled to the dispensing passage member accommodated in the dispensing device (10).

28. System according to claim 22, in which compression means (100, 104, 110, 111) are present for deforming the dispensing passage (101) in such a manner that the substance in the dispensing passage (101) is forced outwards.

29. System according to claim 28, in which the compression means comprise a compression member (100, 110, 111) which is designed, during dispensing of substance, to compress the dispensing passage (101) on a defined compression region and to displace the compression region over the dispensing passage (101) towards the dispensing mouthpiece.

30. System according to claim 28 or 29, in which the compression means are coupled to the drive means of the pressure-exerting member (110).

31. System according to one or more of the preceding claims, in which the container is a pouch (2).

32. System according to claim 31, in which on the inner side of the pouch a substantially annular outlet opening is arranged with an insertion opening for a dispensing passage members (5).

33. System according to claim 32, in which the counter-supporting member (15) has a wall surface which faces the pressure-exerting member (18) and is substantially complementary to the surface of the pressure-exerting member (18) located opposite, in such a manner that the outlet member of the pouch, as seen in the pressure-exerting direction, is recessed with respect to the said wall surface of the counter-supporting member (15), so that the pouch can be emptied by pressure to the maximum possible extent.

34. System according to one or more of the preceding claims, in which the pressure-exerting member (118) is provided with a recess (120), preferably arranged in the vicinity of the peripheral of the pressure-exerting member (118), for receiving deformed, for example crumpled or folded, container material during the compression of the container (2).

35. System according to one or more of the preceding claims, in which the substantially vertically extending peripheral wall of the housing in the chamber (11) has a suitable roughness, so that there is friction between the container (2) and the peripheral wall sufficient to ensure that the deformation of the container (2) occurs only at the pressure-exerting member (18; 118).

## Patentansprüche

1. Eine Abgabevorrichtung (1) für das dosierte Abgeben einer Substanz von einem zusammendrückbaren Behälter (2), wobei die Vorrichtung (1) umfasst:
- ein Gehäuse (10) mit einer Kammer (11) zum Unterbringen des zusammendrückbaren Behälters (2), wobei die Kammer (11) eine sich im Wesentlichen vertikal erstreckende Umfangswand (12) und eine Öffnung (13) aufweist,
- ein Gegenhalterelement (15), wobei das Gegenhalterelement (15) über der Öffnung (13) der Kammer (11) angeordnet werden kann, nachdem der Behälter (2) in der Kammer (11) angeordnet worden ist,
- ein verschiebbares Druckausübungselement (18), das sich als eine Basis erstreckt, die in der Kammer (11) nach oben und unten bewegt werden kann und so gestaltet ist, dass sie auf den Behälter (2) wirkt, der in der Kammer (11) angeordnet ist,
- Antriebsmittel (20; 79) für das Druckausübungselement (18), so dass die Substanz durch Drücken des Behälters (2) zwischen dem Gegenhalterelement (15) und dem Druckausübungselement (18; 118), das sich in der Richtung des Gegenhalterelements (15) bewegt, aus dem Behälter (2) abgegeben wird,
wobei das Gehäuse angrenzend an die Kammer (11) zum Unterbringen des Behälters (2) eine vertikale Kammer (25) zum Unterbringen eines Antriebsmechanismus (20; 79) aufweist,
wobei die Umfangswand der Kammer (11) zum Aufnehmen des Behälters (2) mit einem vertikalen Schlitz (26) ausgestattet ist, der einen Durchgang zu der anderen Kammer (25) bildet,
wobei das Druckausübungselement (18; 118) ein Verbindungselement (27) aufweist, das sich durch den Schlitz (26) und in die andere Kammer (25) erstreckt, wodurch das Druckausübungselement (18) mit dem Antriebsmittel (20; 79) verbunden wird, **dadurch gekennzeichnet, dass** die Kammer (11) zum Unterbringen des Behälters (2) die Öffnung (13) an der Oberseite zum Anordnen des Behälters (2) in der Kammer (11) von oben aufweist, und **dadurch**, dass Abdichtungsmittel (28; 29) zum Abdichten des Durchgangsschlitzes (26) derart, dass sich der Behälter (2) nicht in den Durchgangsschlitz (26) bewegt, wenn er zusammengedrückt wird, bereitgestellt sind.

2. System zur Abgabe einer Substanz, umfassend:
- einen zusammendrückbaren Behälter (2) für einen Vorrat einer Substanz, die abgegeben werden soll, wobei der Behälter (2) ein Auslasselement (3) zum Abgeben einer Substanz von dem Behälter (2) aufweist, und
- eine Abgabevorrichtung (1) für das dosierte Abgeben einer Substanz von dem zusammendrückbaren Behälter (2) nach Anspruch 1.

3. System nach Anspruch 2, bei dem ein Abdichtungsband (28) bereitgestellt ist, das den Schlitz (26) in dem Bereich oberhalb des Druckausübungselements (18) abdichtet, so dass verhindert wird, dass der zusammendrückbare Behälter (2) in den Schlitz (26) eintritt.

4. System nach Anspruch 2 oder 3, das ein Abgabedurchgangselement (5) umfasst, das einen Abgabedurchgang für die Substanz bildet, wobei das Abgabedurchgangselement (5) in der Nähe der Oberseite der Kammer (11) der Abgabevorrichtung (1) bereitgestellt ist und wobei der Abgabedurchgang vorzugsweise ein nach unten gerichtetes Abgabemundstück bildet.

5. System nach Anspruch 4, bei dem das Abgabedurchgangselement (5) eine lose Komponente ist, die mit dem Auslasselement (3) des Behälters gekoppelt werden kann.

6. System nach Anspruch 5, bei dem das Abgabedurchgangselement (5) aus einem einzelnen Kunststoffstück als flexibler Schlauch mit einem harten Endteil zum Koppeln des Abgabedurchgangselements (5) mit dem Auslasselement (3) des Behälters ausgebildet ist.

7. System nach Anspruch 5 oder 6, bei dem die Abgabevorrichtung mit einem Fixiermittel (21) zum Fixieren des Abgabedurchgangselements (5), das bereits an den Behälter gekoppelt worden ist, bezüglich des Gehäuses (10) ausgestattet ist.

8. System nach einem oder mehreren der vorhergehenden Ansprüche, bei dem das Gegenhalterelement (15) ein Deckel ist, der unter Verwendung geeigneter Verriegelungsmittel an dem Gehäuse (10) fixiert werden kann.

9. System nach Anspruch 8, bei dem der Deckel (15) drehbar an dem Gehäuse (10) angebracht ist.

10. System nach einem oder mehreren der vorhergehenden Ansprüche, bei dem die Antriebsmittel (20) einen handbetriebenen Mechanismus umfassen.

11. System nach Anspruch 10, bei dem die Antriebsmittel einen Betätigungsgriff (30) umfassen, der derart über einen Winkelbereich gedreht werden kann, so dass ein Teil der Substanz bei jeder Betätigungsbewegung abgegeben wird.

12. System nach Anspruch 11, bei dem das Gehäuse (10) ein stationäres Drehlager (31) für den Betätigungsgriff (30) vorzugsweise in der Nähe der Oberseite des Gehäuses (10) aufweist.

13. System nach Anspruch 12, bei dem die Antriebsmittel einen Träger (35, 80) umfassen, der mit dem Druckausübungselement (18) verbunden und so geführt ist, dass er sich bezogen auf das Gehäuse (10) vertikal bewegen kann, wobei der Träger in jedem Fall derart mit dem Drehgriff (30) gekoppelt werden kann, dass als Ergebnis der Betätigung des Drehgriffs (30) der Träger (35, 80) in jedem Fall bezogen auf das Gehäuse (10) um eine Distanz nach oben bewegt wird.

14. System nach Anspruch 13, bei dem der Betätigungsgriff (30) mit einem stabartigen Zugelement (81) gekoppelt ist und bei dem der Träger (80) mit einer ersten Schwenkplatte (83) zum Erzeugen der Kopplung zwischen dem Zugelement (81) und dem Träger (80), wenn der Betätigungsgriff (30) betätigt wird, ausgestattet ist.

15. System nach Anspruch 13 oder 14, bei dem die Antriebsmittel auch ein stationäres Führungselement (82) umfassen, an das der Träger (80) derart gekoppelt werden kann, dass der Träger (80), wenn er von dem Betätigungsgriff (30) entkoppelt ist, durch das stationäre Führungselement (82) an Ort und Stelle gehalten wird.

16. System nach Anspruch 15, bei dem das stationäre Führungselement (82) ein stabartiges Element umfasst und bei dem der Träger (80) mit einer zweiten Schwenkplatte (87) zum Erzeugen der Kopplung zwischen dem stationären stabartigen Element (82) und dem Träger (80) ausgestattet ist.

17. System nach einem oder mehreren der Ansprüche 10 bis 16, bei dem die Antriebsmittel einen Druckverminderungsmechanismus zum Bewegen des Druckausübungselements (18) am Ende des Abgebens einer Substanz um eine kleine Distanz zurück ausgestattet ist, um den Druck in dem Behälter zu vermindern.

18. System nach Anspruch 17, soweit Anspruch 17 von Anspruch 16 abhängig ist, bei dem die zweite Schwenkplatte (87) derart elastisch bzw. federnd an dem Träger (80) angebracht ist, dass der Träger (80) in dem Moment, in dem die Schwenkplatte (87) das stationäre stabartige Element (82) in Eingriff nimmt, um eine Distanz nach unten fallen kann, die derart ist, dass der Druck in dem Behälter vermindert wird.

19. System nach Anspruch 17, soweit Anspruch 17 von Anspruch 16 abhängig ist, bei dem die zweite Schwenkplatte (87) derart geformt ist, dass bei einem definierten minimalen Schwenkwinkel der Schwenkplatte (87) bezogen auf das stationäre stabartige Element (82) diese mit dem stationären stabartigen Element gekoppelt wird, wobei der minimale Schwenkwinkel erreicht wird, wenn der Träger (80) um eine bestimmte Distanz nach unten gefallen ist.

20. System nach Anspruch 11, bei dem der Betätigungsgriff ein dazugehöriges Drehlager (31) aufweist, das derart in einer vertikal bewegbaren Weise bezogen auf das Gehäuse (10) geführt ist, dass das Drehlager (31) als Ergebnis der Betätigung des Drehgriffs (30) bezogen auf das Gehäuse (10) in jedem Fall um eine Distanz nach oben bewegt wird.

21. System nach Anspruch 4, bei dem ein Ventil, vorzugsweise ein selbstschließendes Ventil, zum Abschließen des Abgabedurchgangs bereitgestellt ist.

22. System nach Anspruch 4, bei dem das Abgabedurchgangselement ein flexibles schlauchartiges Element (5) umfasst, das den Abgabedurchgang bildet.

23. System nach den Ansprüchen 21 und 22, bei dem die Vorrichtung mit einem Quetschsperrmittel (40) zum lokalen Quetschen des flexiblen schlauchartigen Elements (5) zu einem gesperrten Zustand ausgestattet ist, z.B. mit einem Quetschsperrmittel, das unter Federdruck steht.

24. System nach Anspruch 4, bei dem ein aktiv betätigbares Ventil zum Abschließen des Abgabedurchgangs bereitgestellt ist, wobei das Ventil mit dem Antriebsmittel (20, 79) des Druckausübungselements (18) derart gekoppelt ist, dass das Ventil durch die Antriebsmittel (20; 79) aktiv geöffnet wird, wenn das Druckausübungselement (18) angetrieben wird, um den Behälter (2) zusammenzudrücken.

25. System nach Anspruch 24, bei dem das aktiv betätigbare Ventil mit einem Zeitsteuerungsmechanismus ausgestattet ist, der das geöffnete Ventil nach einer vorgegebenen Zeit schließt.

26. System nach Anspruch 24 oder 25, bei dem das aktiv betätigbare Ventil durch die Antriebsmittel (20; 79) für das Druckausübungselement derart betätigt werden kann, dass das Ventil unmittelbar vor dem Antreiben des Druckausübungselements (18) geöffnet wird.

27. System nach Anspruch 4, bei dem das Abgabedurchgangselement mit der Abgabevorrichtung integriert ist, so dass der Behälter (2) mit dem Abgabedurchgangselement, das in der Abgabevorrichtung (10) untergebracht ist, gekoppelt werden kann.

28. System nach Anspruch 22, bei dem Zusammendrückmittel (100, 104, 110, 111) zum Verformen des Abgabedurchgangs (101) derart vorliegen, dass die Substanz in dem Abgabedurchgang (101) nach außen gedrückt wird.

29. System nach Anspruch 28, bei dem die Zusammendrückmittel ein Zusammendrückelement (100, 110, 111) umfassen, das so gestaltet ist, dass es während des Abgebens einer Substanz den Abgabedurchgang (101) auf einem festgelegten Zusammendrückbereich zusammendrückt und den Zusammendrückbereich über den Abgabebereich (101) in die Richtung des Abgabemundstücks verschiebt.

30. System nach Anspruch 28 oder 29, bei dem die Zusammendrückmittel mit den Antriebsmitteln des Druckausübungselements (110) gekoppelt sind.

31. System nach einem oder mehreren der vorhergehenden Ansprüche, bei dem der Behälter ein Beutel (2) ist.

32. System nach Anspruch 31, bei dem auf der Innenseite des Beutels eine im Wesentlichen ringförmige Auslassöffnung mit einer Einsetzöffnung für ein Abgabedurchgangselement (5) angeordnet ist.

33. System nach Anspruch 32, bei dem das Gegenhalterelement (15) eine Wandfläche aufweist, die auf das Druckausübungselement (18) gerichtet ist und zur gegenüber liegenden Oberfläche des Druckausübungselements (18) im Wesentlichen komplementär ist, und zwar derart, dass das Auslasselement des Beutels, betrachtet in der Richtung der Druckausübung, bezüglich auf die Wandfläche des Gegenhalterelements (15) ausgespart ist, so dass der Beutel mittels Druck in dem größtmöglichen Ausmaß entleert werden kann.

34. System nach einem oder mehreren der vorhergehenden Ansprüche, bei dem das Druckausübungselement (118) mit einer Aussparung (120) ausgestattet ist, die vorzugsweise in der Nähe des Umfangs des Druckausübungselements (118) angeordnet ist, um ein verformtes, wie z.B. ein zerknittertes oder gefaltetes, Behältermaterial während des Zusammendrückens des Behälters (2) aufzunehmen.

35. System nach einem oder mehreren der vorhergehenden Ansprüche, bei dem die sich im Wesentlichen vertikal erstreckende Umfangswand des Gehäuses in der Kammer (11) eine geeignete Rauhigkeit aufweist, so dass eine Reibung zwischen dem Behälter (2) und der Umfangswand vorliegt, die ausreichend ist, um sicherzustellen, dass die Verformung des Behälters (2) nur an dem Druckausübungselement (18; 118) stattfindet.

## Revendications

1. Un dispositif de distribution (1), pour la distribution dosée d'une substance depuis un récipient (2) compressible, le dispositif (1) comprenant :
- un boîtier (10) ayant une chambre (11) pour loger le récipient (2) compressible, ladite chambre (11) ayant une paroi périphérique (12) s'étendant, sensiblement, verticalement et une ouverture (13),
- un organe de contre-support (15), ledit organe de contre-support (15) pouvant être placé sur l'ouverture (13) de la chambre (11), après que le récipient (2) ait été placé dans la chambre (11),
- un organe de pressage (18) déplaçable, s'étendant en tant que base, pouvant être levée et abaissée dans la chambre (11), et conçu pour agir sur le récipient (2) placé dans la chambre (11),
- des moyens d'entraînement (20 ; 79) pour l'organe de pressage (18), de manière que la substance soit distribuée à partir du récipient (2) par une compression du récipient (2) entre l'organe de contre-support (15) et l'organe de pressage (18 ; 118) se déplaçant dans la direction de l'organe de contre-support (15),
dans lequel le boîtier, placé à la suite de la chambre (11) pour loger le récipient (2), présente une chambre (25) verticale devant loger un mécanisme d'entraînement (79), dans lequel la paroi périphérique de la chambre (11) pour loger le récipient (2) est munie d'une fente (26) verticale, formant un passage vers l'autre chambre (25), l'organe de pressage (18 ; 118) ayant un élément de connexion (27) s'étendant à travers ladite chambre (26) et dans l'autre chambre (25), de manière à relier l'organe de pressage (18) aux moyens d'entraînement (20 ; 79), **caractérisé en ce que** la chambre (11) pour loger le récipient (2) présente l'ouverture (13) sur la face supérieure, afin de placer le récipient (2) dans la chambre (11), par le dessus, et **en ce que** des moyens d'étanchéité (28 ; 29) sont prévus pour isoler hermétiquement la fente de passage (26), de manière que le récipient (2) ne se déplace pas à l'intérieur de la fente de passage (26) lorsqu'il est compressé.

2. Système pour distribuer une substance, comprenant :
- un récipient compressible (2) pour un stock de substance devant être distribuée, ledit récipient (2) ayant un organe de sortie (3) pour distribuer une substance depuis le récipient (2), et
- un dispositif de distribution (1) pour la distribution dosée d'une substance depuis le récipient (2) compressible, selon la revendication 1.

3. Système selon la revendication 2, dans lequel un ruban d'étanchéité (28) est prévu, fermant hermétiquement la fente (26) dans la région se trouvant au-dessus de l'organe de pressage (18), de manière à empêcher que le récipient (2) compressible ne pénètre dans la fente (26).

4. Système selon la revendication 2 ou 3, comprenant un organe formant passage de distribution (5), formant un passage de distribution pour la substance, l'organe formant passage de distribution (5) étant prévu à proximité de la face supérieure de la chambre (11) du dispositif de distribution (1) et le passage de distribution, de préférence, formant une pièce d'embouchure de distribution, tournée vers le bas.

5. Système selon la revendication 4, dans lequel l'organe formant passage de distribution (5) est un composant lâche, pouvant être couplé à l'organe de sortie (3) du récipient.

6. Système selon la revendication 5, dans lequel l'organe formant passage de distribution (5) est formé d'une pièce unique de matière plastique, réalisée sous forme de tube flexible ayant une partie d'extrémité dure devant s'accoupler à l'organe formant passage de distribution (5), à l'organe de sortie (3) du récipient.

7. Système selon la revendication 5 ou 6, dans lequel le dispositif de distribution est muni de moyens de fixation (21) pour fixer l'organe formant passage de distribution (5), ayant déjà été couplé au récipient, par rapport au boîtier (10).

8. Système selon une ou plusieurs des revendications précédentes, dans lequel l'organe de contre-support (15) est un couvercle pouvant être fixé au boîtier (10) en utilisant des moyens de verrouillage appropriés.

9. Système selon la revendication 8, dans lequel le couvercle (15) est attaché à pivotement au boîtier (10).

10. Système selon une ou plusieurs des revendications précédentes, dans lequel les moyens d'entraînement (20) comprennent un mécanisme à entraînement manuel.

11. Système selon la revendication 10, dans lequel les moyens d'entraînement comprennent une poignée d'actionnement (30), pouvant être pivotée sur une plage angulaire, de telle manière qu'une partie de substance soit distribuée à chaque mouvement d'actionnement.

12. Système selon la revendication 11, dans lequel le boîtier (10) présente un palier de pivotement (31) stationnaire, pour la poignée d'actionnement (30), de préférence à proximité de la face supérieure du boîtier (10).

13. Système selon la revendication 12, dans lequel les moyens d'entraînement comprennent un support (35), relié à l'organe de pressage (18) et guidé de manière qu'il puisse se déplacer verticalement par rapport au boîtier (10), ledit support pouvant, dans chaque cas, être couplé à la poignée de pivotement (30), de manière que, en résultat de l'actionnement de la poignée de pivotement, le support (35) soit, dans chaque cas, déplacé d'une certaine distance vers le haut par rapport au boîtier (10).

14. Système selon la revendication 13, dans lequel la poignée d'actionnement (30) est couplée à un élément de traction (31) analogue à une tige et dans lequel le support (80) est muni d'une première plaque d'inclinaison (83) pour produire l'accouplement entre l'élément de tirage (81) et le support (80), lorsque la poignée d'actionnement (30) est actionnée.

15. Système selon la revendication 13 ou 14, dans lequel les moyens d'entraînement comprennent également un élément de guidage (82) stationnaire, auquel le support (80) peut être couplé, de manière que le support (80), une fois qu'il est découplé de la poignée d'actionnement (30), soit maintenu en place par l'élément de guidage (82) stationnaire.

16. Système selon la revendication 15, dans lequel l'élément de guidage (82) stationnaire comprend un élément analogue à une tige, et dans lequel le support (80) est muni d'une deuxième plaque d'inclinaison (87) pour produire le couplage entre l'élément analogue à une tige (82) stationnaire et le support (80).

17. Système selon une ou plusieurs des revendications 10 à 16, dans lequel les moyens d'entraînement comprennent un mécanisme de réduction de pression, de manière à déplacer l'organe de pressage (18) sur une petite distance de retour, à la fin de la distribution de la substance, afin de réduire la pression dans le récipient.

18. Système selon la revendication 17, dans la mesure où elle dépend de la revendication 16, dans lequel la deuxième plaque d'inclinaison (87) est montée élastiquement sur le support (80), de manière que le support (80), à l'instant auquel la plaque d'inclinaison (87) vient en prise sur l'élément (82) analogue à une tige stationnaire, soit en mesure de chuter vers le bas d'une distance telle que la pression dans le récipient soit réduite.

19. Système selon la revendication 17, dans la mesure où elle dépend de la revendication 16, dans lequel la deuxième plaque d'inclinaison (87) est conformée de manière que, à un angle d'inclinaison minimal défini de la plaque d'inclinaison (87), par rapport à l'élément (82) analogue à une tige stationnaire, elle soit couplée à cette dernière, ledit angle d'inclinaison minimum étant atteint lorsque le support (80) a chuté vers le bas d'une certaine distance.

20. Système selon la revendication 11, dans lequel la poignée d'actionnement a un palier de pivotement (81) associé, guidé de manière déplaçable verticalement par rapport au boîtier (10), de telle manière que, en résultat de l'actionnement de la poignée de pivotement (30), la poignée de pivotement (31) soit, dans chaque cas, déplacée d'une certaine distance vers le haut par rapport au boîtier (10).

21. Système selon la revendication 4, dans lequel une soupape, de préférence une soupape à fermeture automatique, est prévue pour fermer le passage de distribution.

22. Système selon la revendication 4, dans lequel l'organe formant passage de distribution comprend un élément (5) analogue à un tuyau flexible, formant le passage de distribution.

23. Système selon les revendications 21 et 22, dans lequel le dispositif est muni de moyens de fermeture par écrasement (40), pour fermer localement par écrasement l'élément (5) analogue à un tuyau flexible, par exemple des moyens de fermeture par écrasement placés sous l'effet d'une pression élastique.

24. Système selon la revendication 4, dans lequel une soupape actionnable activement est prévue pour fermer le passage de distribution, ladite soupape étant couplée aux moyens d'entraînement (20; 79) de l'organe de pressage (18), de manière que la soupape soit ouverte activement par les moyens d'entraînement (20 ; 79), lorsque l'organe de pressage (18) est entraîné de manière à compresser le récipient (2).

25. Système selon la revendication 24, dans lequel la soupape actionnable activement est munie d'un mécanisme de positionnement temporel, fermant la soupape ouverte après expiration d'une durée prédéterminée.

26. Système selon la revendication 24 ou 25, dans lequel la soupape actionnable activement peut être actionnée par les moyens d'entraînement (20 ; 79) pour l'organe de pressage, de manière que la soupape soit ouverte juste avant que l'organe de pressage (18) soit entraîné.

27. Système selon la revendication 4, dans lequel l'organe formant passage de distribution est réalisé d'une seule pièce avec le dispositif de distribution, de manière que le récipient (2) puisse être couplé à l'organe formant passage de distribution logé dans le dispositif de distribution (10).

28. Système selon la revendication 22, dans lequel des moyens de compression (100, 104, 110, 111) sont présents, afin de déformer le passage de distribution (101) de telle manière que la substance présente dans le passage de distribution (101) soit forcée à sortir.

29. Système selon la revendication 28, dans lequel les moyens de compression comprennent un organe de compression (100, 110, 111) conçu durant la distribution de la substance pour comprimer le passage de distribution (101) sur une région de compression définie, afin de déplacer la région de compression sur le passage de distribution (101) vers la pièce d'embouchure de distribution.

30. Système selon la revendication 28 ou 29, dans lequel les moyens de compression sont couplés aux moyens d'entraînement de l'organe de pressage (110).

31. Système selon une ou plusieurs des revendications précédentes, dans lequel le récipient est une poche (2).

32. Système selon la revendication 31, dans lequel, sur la face intérieure de la poche, est agencée une ouverture de sortie sensiblement annulaire, ayant une ouverture d'insertion pour un organe de passage de distribution (5).

33. Système selon la revendication 32, dans lequel l'organe de contre-support (19) présente une surface de paroi, placée face à l'organe de pressage (18) et sensiblement complémentaire à la surface de l'organe de passage (18) placée à l'opposé, de telle manière que l'organe de sortie de la poche, tel qu'observé dans la direction d'exercice de la pression, soit en retrait par rapport à ladite surface de paroi de l'organe de contre-support (15), pour que la poche puisse être vidée, sous l'effet de la pression, au degré maximal possible.

34. Système selon une ou plusieurs des revendications précédentes, dans lequel l'organe de pressage (118) est muni d'une cavité (120) agencée, de préférence, à proximité de la périphérie de l'organe de pressage (118), pour recevoir un matériau du récipient déformé, par exemple froissé ou plié, durant la compression du récipient (2).

35. Système selon une ou plusieurs des revendications précédentes, dans lequel la paroi périphérique s'étendant, sensiblement verticalement, du boîtier dans la chambre (11) présente une rugosité appropriée, de manière qu'il y ait entre le récipient (2) et la paroi périphérique une friction suffisante pour assurer que la déformation du récipient (2) se produise uniquement au niveau de l'organe de pressage (18 ; 118).
